**Europäisches Patentamt**

**European Patent Office**

**Office européen des brevets**

(19)

(11) Veröffentlichungsnummer: **0 468 609 A2**

# EUROPÄISCHE PATENTANMELDUNG

(12)

(21) Anmeldenummer: **91250204.4**

(22) Anmeldetag: **23.07.91**

(51) Int. Cl.5: **G01N 23/207**

(30) Priorität: **23.07.90 DE 4023358**

(43) Veröffentlichungstag der Anmeldung:
**29.01.92 Patentblatt 92/05**

(84) Benannte Vertragsstaaten:
**DE FR GB IT NL**

(71) Anmelder: **Deutsches
Elektronen-Synchrotron DESY
Notkestrasse 85
W-2000 Hamburg 52(DE)**

Anmelder: **Hahn-Meitner-Institut Berlin
Gesellschaft mit beschränkter Haftung
Glienicker Str. 100**

**W-1000 Berlin 39(DE)**

(72) Erfinder: **Schneider, Jochen
Oelsnerring 63
W-2000 Hamburg 52(DE)**
Erfinder: **Graf, Hans Anton
Glienickerstrasse 88
W-1000 Berlin 39(DE)**

(74) Vertreter: **Wolff, Konrad
Heinrich-Hertz-Institut für
Nachrichtentechnik Berlin GmbH
Einsteinufer 37
W-1000 Berlin 10(DE)**

(54) **Verfahren zur Untersuchung von einkristallinem Material auf Ausscheidungen von Fremdphasen.**

(57) Bei der Herstellung und Bearbeitung von einkristallinem Material ist es wichtig, Abweichungen von der idealen Kristallstruktur erfassen zu können. Benötigt werden Angaben zur Dichte und mittleren Ausdehnung von Fremdphasen-Ausscheidungen.

Die Durchstrahlung diskreter Kristallbereiche mit Wellen- oder Teilchenstrahlen, Erfassung der Intensitätsverteilung der unter Bragg-Bedingungen gebeugten Strahlen und Bestimmung statischer Debye-Waller-Faktoren soll universell, bei unterschiedlichen Probendicken, mit hoher Auflösung und Flexibilität bezüglich Wellenlängen-Änderungen automatisiert erfolgen. Hierzu werden eine Variation des Einfallswinkels der Strahlen zu den beugenden Netzebenen und die Messung des Reflexionsvermögens mittels eines Photonen- bzw. Teilchen-Detektors ausgeführt und das integrale Reflexionsvermögen $R_{int}$ bestimmt. Schwenken der Probe um eine Achse, die senkrecht auf beugenden Netzebenen steht, führt zu einer Variation der Probendicke. $R_{int}$ wird in Abhängigkeit von der Probendicke erfaßt. Aus der gemessenen Abhängigkeit, an eine theoretische Funktion angepaßt, ergibt sich der statische Debye-Waller-Faktor und bei Messung mehrerer Beugungsordnungen die Dichte bzw. Zahl sowie die mittlere Ausdehnung der Ausscheidungen.

Wichtige Anwendungen liegen in der in-situ Bestimmung von Fremdphasen-Ausscheidungen, in Untersuchungen von Si-Wafern, die ortsabhängig nach Dichte und Größe von $SiO_2$-Ausscheidungen karthographiert werden können, und dergleichen.

Fig.3

Die Erfindung betrifft ein Verfahren zur Untersuchung von einkristallinem Material auf Ausscheidungen von Fremdphasen, wobei eine Durchstrahlung diskreter Kristallbereiche mit Wellen- oder Teilchen-Strahlen, eine Aufzeichnung der Intensitätsverteilung von unter Bragg-Bedingungen gebeugten Strahlen und eine Bestimmung des statischen Debye-Waller-Faktors durch Anpassung aufgezeichneter Intensitätswerte an eine vorgegebene theoretische Funktion erfolgen.

Da die Herstellung und die Bearbeitung von Einkristallen in vielen industriellen Anwendungsgebieten eine wichtige Rolle spielen, sind entsprechende Verfahren bedeutsam, mit denen die hergestellten Kristalle untersucht worden können und die Abweichungen von der idealen Kristallstruktur erfaßt werden, um so Herstellungs- und Bearbeitungsverfahren kontrollieren und optimieren zu können. Eine typische Anwendung derartiger Verfahren stellt die Untersuchung von Si-Wafern dar, die zur Weiterverarbeitung in der Halbleiterindustrie und Mikroelektronik benötigt werden.

Si-Wafer liegen zumeist in Form von Einkristallscheiben mit typischen Abmessungen von etwa 0,4 mm Dicke und 200 mm Durchmesser vor. Die nach dem Kristallziehen gewonnenen Wafer enthalten einen Sauerstoffanteil von größenordnungsmäßig 10 ppm, mit Ausnahme der aktiven Oberflächenschicht von etwa 20 $\mu$m Dicke, die praktisch sauerstofffrei ist. Bei der Weiterbearbeitung werden die Wafer beim Tempern aufgeheizt; bei etwa 700 °C tendiert der vorher atomar vorliegende Sauerstoff zur Bildung von $SiO_2$-Molekülen. Die $SiO_2$-Moleküle können Si-Atome im Kristallgitter substituieren, wodurch lokale Verzerrungen der Gitterstrukturen entstehen.

Es hat sich gezeigt, daß die Verzerrung des Gitters attraktiv auf weitere $SiO_2$-Moleküle wirkt, die sich in flächiger Struktur anlagern. Auf diese Weise bilden sich dünne Plättchen von $SiO_2$-Ausscheidungen, die Spannungen im Kristall verursachen. Diese Ausscheidungen haben außerdem die Eigenschaft, Fremdatome intern zu gettern, und zwar insbesondere Metallatome wie Ag, Cu etc., die aus Verunreinigungen in Chemikalien herrühren, welche beim Herstellungsprozeß von Halbleiterelementen erforderlich sind, beispielsweise Ätzflüssigkeiten. Durch das Gettern wird die Ausbeute bei der Herstellung mikroelektronischer Halbleiterbauelemente stark erhöht. Voraussetzung dafür ist, daß die interne Getterschicht unterhalb der später elektrisch aktiven Oberflächenschicht des Wafers liegt.

Die durch Ausscheidungen im Kristallgitter bedingten Spannungen bauen sich bei den in weiteren Prozeßschritten auftretenden höheren Temperaturen von über 1000 °C ab und resultieren in Stapelfehlern. Die Stapelfehler bilden langreichweitige Verzerrungsfelder aus, die sich bis in die sauerstofffreie Oberflächenschicht hinein erstrecken. Das ist erwünscht, um aus der Oberflächenschicht Verunreinigungen "abzusaugen" und an den Stapelfehlern in den tieferen Kristallschichten zu fixieren. Es wird deshalb angestrebt, die Bearbeitungsprozesse der Wafer so zu gestalten, daß eine Gleichverteilung und Homogenisierung der $SiO_2$-Ausscheidungen erreicht wird, um ein möglichst gleichmäßiges internes Gettern zu gewährleisten und damit Störungen der elektrisch aktiven Oberflächenschicht zu vermeiden.

Demgemäß besteht seit langem Bedarf nach einem Verfahren, mit dem Fremdphasen-Ausscheidungen nach Dichte, Größe und Verteilung im Wafer beobachtbar und meßbar gemacht werden können; dies gilt insbesondere für ein Verfahren, das nach einzelnen Prozeßschritten wiederholt oder sogar in situ, d.h. beispielsweise während des Temperns im Ofen durchgeführt werden kann.

Aus der JP-Zeitschrift: Japanese Journal of Applied Physics, Bd. 27, Nr. 6, Juni 1988, Seiten 1081 bis 1087 (S. Iida et al: Measurement and Analysis of the Static Debye-Waller Factor of Cz-Silicon with Small Oxygen Precipitates) ist eine Methode der eingangs genannten Art bekannt, die sich für labormäßige Untersuchungen von Si-Proben auf $SiO_2$-Ausscheidungen sowohl größerer Ausdehnung und geringer Dichte als auch auf derartige Mikro-Ausscheidungen eignet, deren Abmessungen im Verhältnis zur Auflösung der aufgezeichneten Intensitätsverteilung klein sind. Dabei erfolgt die Aufzeichnung der Intensitätsverteilung photographisch, und die Schwärzung des Filmes ist z.B. mit einem Mikrodensitometer auszuwerten. Hierfür müssen Probe und scharf kollimierter Strahl fest orientiert sein, und die Probe und der zu belichtende Film sollten einen möglichst geringen Abstand voneinander aufweisen.

Der Erfindung liegt demgegenüber das technische Problem zugrunde, ein Verfahren für derartige Untersuchungen zu schaffen, das - wie weiter oben bereits erwähnt ist - universell, bei verschiedenartigen Schritten eines Herstellungsprozesses, angewendet werden kann, unterschiedliche, zudem große Probendicken zuläßt, dabei eine hohe Auflösung ermöglicht, flexibel bezüglich Änderungen der Wellenlänge der benutzten Strahlung ist und insbesondere die Voraussetzungen zur Automatisierung erfüllt.

Zur Lösung hierfür dient das Verfahren mit den Merkmalen des Patentanspruchs 1.

Bei dem erfindungsgemäßen Verfahren wird als die zu untersuchende Probe eine Kristallscheibe z.B. mit Röntgenstrahlen in Laue-Durchleuchtungsgeometrie bestrahlt. Diese rufen Bragg-Reflexion an Netzebenen des Gitters hervor, die senkrecht auf der bestrahlten Kristalloberfläche stehen. Der gebeugte Strahl gelangt an einen Photonendetektor, und das absolute Reflexionsvermögen R läßt sich in an sich bekannter Weise bestimmen. Anschließend wird die Orientierung der Kristallscheibe variiert, indem sie um eine erste Achse gedreht wird, die senkrecht auf der Beugungsebene steht, die durch den einfallenden und den gebeugten Strahl definiert ist. Das Reflexionsvermögen, als Funktion des Drehwinkels $\Theta$ um die erste Achse als gespeicherte Signale aufgezeichnet, führt zum Bragg-Reflexionspeak. Eine Integration über den Drehwinkel $\Theta$ liefert das integrale Reflexionsvermögen $R_{int} = \Sigma R_i \times d\Theta$.

Die Größe $R_{int}$ wird nun in einer Meßreihe wiederholt gemessen, wobei in aufeinanderfolgenden Messungen die wirksame bzw. effektive Probendicke variiert, d.h. die durch den Strahl im Kristall zurückzulegende Weglänge verändert wird. Herbeigeführt wird die Variation der effektiven Probendicke durch Schwenken der Kristallscheibe um eine zweite Achse, die senkrecht auf der Netzebene steht, an der gebeugt wird. Durch diese Variation des Schwenkwinkels $\Phi$ ändert sich der von dem Wellen- oder Teilchenstrahl im Kristall zurückgelegte Weg und entsprechend die effektive Probendicke, jedoch bleibt der Einfallwinkel des Strahls zu den Netzebenen, an denen gebeugt wird, konstant. Auf diese Weise liefert eine Meßreihe mit n Messungen eine Reihe von Werten $R_{int}^{\ j}$ - ($\Phi_j$), j = 1, ..., n in Abhängigkeit von Schwenkwinkeleinstellungen $\Phi_j$ und entsprechend von effektiven Probendicken $d_j$.

Die gemessene Abhängigkeit $R_{int}^{\ j}$ ($d_j$) läßt sich mit einem theoretischen Ansatz $R_{int,theo}$ (d, E) beschreiben, der durch die Beugungstheorie von Bekker und Al Haddad (Dissertation: Al Haddad, Universität Grenoble, 1989) gegeben ist. Die Beugungstheorie von Kato (N. Kato, Acta Cryst. (1980) 763, 770) , wie sie von Iida (vgl. die weiter oben bereits genannte Veröffentlichung in Jp. J. Appl. Phys.) verwendet wurde, ist hingegen mit den experimentellen Untersuchungen nicht in Einklang zu bringen. In beiden Theorien ist als Parameter der statische Debye-Waller Faktor E enthalten; dieser Parameter drückt Abweichungen von der idealen Kristallstruktur aus und hängt von der mittleren Verschiebung der Gitteratome aus den ungestörten Gitterpunkten in dem beobachteten Kristallbereich ab. Diese bekannten Zusammenhänge ermöglichen durch Messungen des statischen Debye-Waller Faktors, die Dichte und Ausdehnung von Ausscheidungen in einkristallinem Material zu berechnen. Diese Berechnungen lassen sich bei den durch die Erfindung vorhandenen Voraussetzungen automatisch durchführen.

Besonders vorteilhafte Ausgestaltungen des erfindungsgemäßen Verfahrens sind in den Patentansprüchen 2 bis 4 angegeben. Die Erfindung wird nachstehend anhand von Figuren näher erläutert; es zeigen:

Fig. 1:　die Abhängigkeit des integralen Reflexionsvermögens von der Probendicke;

Fig. 2:　die Abhängigkeit des integralen Reflexionsvermögens von der Probendicke ähnlich wie in Fig. 1, jedoch in anderem Maßstab und für einen anderen Kristall; und

Fig. 3:　eine schematische Darstellung für den Aufbau einer Anordnung zur Durchführung des Verfahrens.

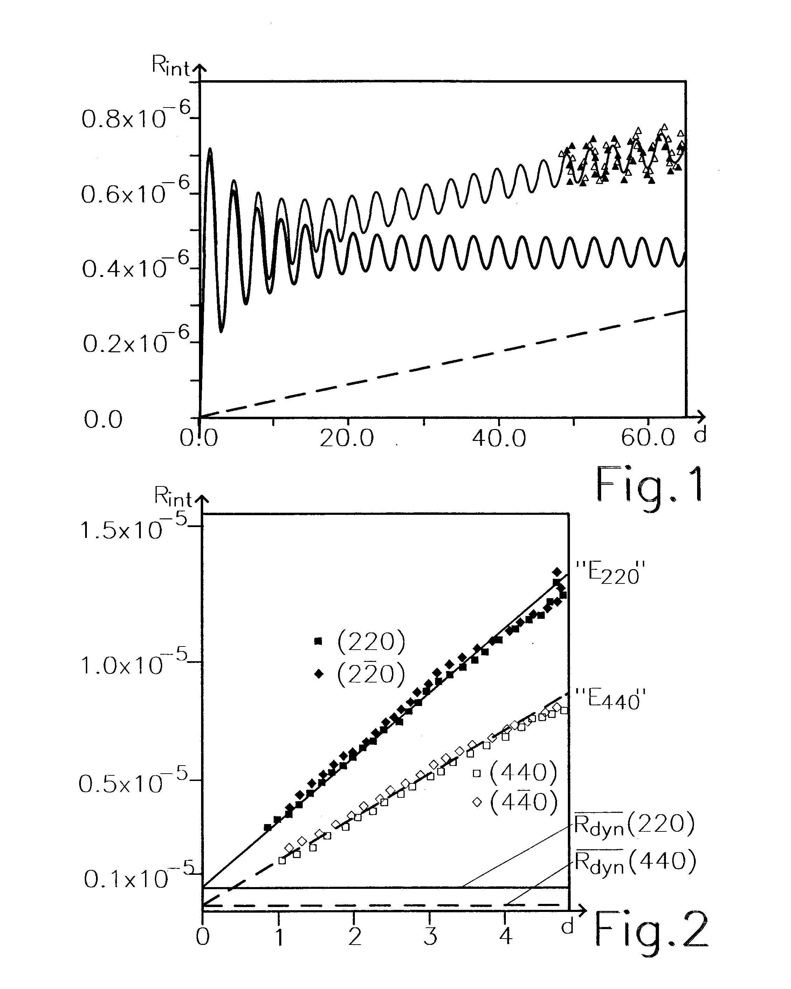

Die im Zusammenhang mit der vorliegenden Erfindung durchgeführten Messungen zeigen, daß Fremdphasen-Ausscheidungen deutlichen Einfluß auf das Reflexionsvermögen haben, der sich als lineares Anwachsen von $R_{int}$ mit der effektiven Probendicke zeigt; dabei kann das integrale Reflexionsvermögen Werte erreichen, die erheblich über denen eines ungestörten, idealen Kristalls liegen, für den $R_{int}$ lediglich ein oszillatorisches Verhalten (bekannt als Pendellösungsoszillatotionen), aber kein lineares Wachstum mit der Probendicke ergibt. Dies ist in Figur 1 verdeutlicht, die das integrale absolute Reflexionsvermögen in Abhängigkeit von der Probendicke für einen perfekten Kristall (fette Linie) und einen realen, durch $SiO_2$-Ausscheidungen gestörten Si-Kristall (dünne Linie und Meßpunkte) zeigt, dessen Verhalten sich als Summe aus einem Anteil des perfekten Kristalls und eines mit der Probendicke anwachsenden Anteils durch Fremdphasen-Ausscheidungen (gestrichelte Linie) erweist.

Figur 2 zeigt das starke Anwachsen des Reflexionsvermögens mit der Probendicke, das dabei Werte erreicht, die erheblich über denen eines ungestörten Kristalls liegen, dessen mittleres Reflexionsvermögen in den konstanten Geraden im unteren Teil der Figur 2 dargestellt ist. Diese sensitive Abhängigkeit des Reflexionsvermögens von Kristallstörungen erlaubt durch Anpassung des theoretischen Ansatzes $R_{int,theo}(d,E)$ an die Meßreihe $R_{int}^{\ j}$ ($d_j$), den statischen Debye-Waller Faktor sehr präzise zu bestimmen. Aus der Messung des Debye-Waller Faktors bei wenigstens zwei Beugungsordnungen ergibt sich in bekannter Weise die Dichte, d.h. die Anzahl der Ausscheidungen sowie deren mittlere Ausdehnung. Dazu werden nacheinander die Debye-Waller Faktoren beispielsweise der 220-Reflexion und der nächst höheren 440-Reflexion gemessen und die zugehörigen Ergebnisse $E_{220}$ und $E_{440}$ zur Berechnung benutzt. Figur 2 zeigt das integrale absolute Reflexionsvermögen für die 220-Reflexion und die 440-Reflexion, aus denen jeweils durch Anpassung an die theoretische Funktion die zugehörigen Debye-Waller Faktoren $E_{220}$ und $E_{440}$ bestimmt werden.

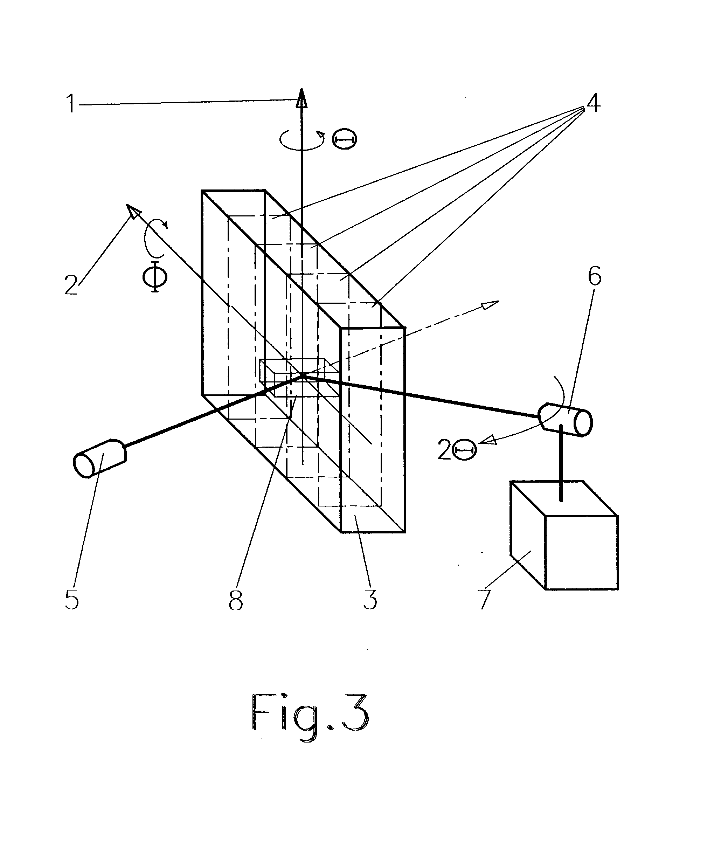

Der in Figur 3 als Probe 3 gezeigte Kristall enthält die Netzebenenschar 4, an der gebeugt wird und die senkrecht zur Kristalloberfläche orientiert ist. Die Dicke der zu untersuchenden Kristallscheiben sollte für Silicium etwa im Bereich von 0,3 mm bis 10 mm liegen, wobei die maximale Dicke durch die mittlere freie Weglänge der Photonen- bzw. Teilchen-Strahlen begrenzt wird.

Die Strahlenquelle 5 erzeugt z.B. einen Röntgenstrahl, der auf ein Oberflächenelement der Probe 3 fällt. In der bevorzugten Ausführungsform sollte die Wellenlänge der Röntgenstrahlen im Bereich von 0,02 bis 0,003 nm (entsprechend Photonenenenergien von 50 bis 450 keV) liegen. Als Röntgenquellen können dabei alle bekannten Vorrichtungen dienen, so z.B. Röntgenröhren oder sogar starke radioaktive Gamma-Präparate; besonders vorteilhaft ist die Verwendung von Synchrotronstrahlung, wie weiter unten erläutert wird.

Die Bragg-Reflexion des einfallenden Strahls an den Netzebenen 4 erzeugt einen gebeugten Strahl, der bei den verwendeten hohen Photonenenergien unter kleinem Winkel zum einlaufenden Strahl ausläuft. Zum Nachweis der Röntgenstrahlen dient ein Photonendetektor 6. Hierzu können alle bekannten Detektoren dienen, die ausreichend hohe Nachweiseffizienz bei hohen Photonenenergien haben, wie beispielsweise NaJ-Szintillationszähler oder Ge-Halbleiterdetektoren. Die elektrischen Ausgabesignale werden an eine Verarbeitungseinheit 7 weitergeleitet und dort z.B. in einem elektronischen Speicher aufgezeichnet.

Zur Messung des integralen absoluten Reflexionsvermögens erfolgt eine Variation der Orientierung der Probe 3. Dazu wird die Kristallscheibe um die Achse 1 gedreht, die senkrecht zu der durch den einfallenden und den gebeugten Strahl definierten Beugungsebene steht. Dadurch wird der Winkel zwischen einfallendem Strahl und der beugenden Netzebene 4 variiert.

Durch Messung des Reflexionsvermögens in einer Folge von Einstellungen des Drehwinkels $\Theta$ um die Achse 1 erhält man, bei Darstellung gegen $\Theta$, einen Reflexionspeak, dessen Lage durch die Bragg-Bedingung festgelegt wird. Das integrale Reflexionsvermögen $R_{int}$ ergibt sich durch Integration der Meßwerte über die Drehwinkeleinstellungen $\Theta$. Die Integration kann in verschiedener Weise ausgeführt werden, beispielsweise durch Aufsummation der digitalisiert abgespeicherten Einzelmeßwerte in der Verarbeitungseinheit; ebenso kann die Integration bei kontinuierlicher und gleichmäßiger Variation des Drehwinkels $\Theta$ durch Akkumulation oder zeitliche Integration der Meßresultate durchgeführt werden.

Im nächsten Schritt wird die effektive Probendicke der Kristallscheibe variiert, indem die Probe 3 um die Achse 2 geschwenkt wird. Bei Drehung um die Achse 2 bleibt der Einfallswinkel der Strahlung zur Netzebene konstant, während sich der in der Kristallscheibe zurückgelegte Weg verändert und so die effektive Probendicke mit $1/\cos(\Phi)$ ($\Phi = 0$ bei senkrechtem Einfall) variiert und kontinuierlich eingestellt werden kann.

In wiederholten Messungen von $R_{int}$ bei aufeinanderfolgenden Einstellungen $\Phi_j$ des Schwenkwinkels wird jeweils die Einstellung $\Phi_j$ und die zugehörige Messung $R_{int}^j$ aufgezeichnet. Auf diese Weise ergibt sich bei n aufeinanderfolgenden Einstellungen $\Phi_j$ eine Folge von Meßwerten $R_{int}^j (\Phi_j)$, j = 1, ..., n oder äquivalent eine Folge von Meßwerten in Abhängigkeit von der Probendicke $R_{int}^j (d_j)$, wobei die Meßwertfolge in der Verarbeitungseinheit abgespeichert ist.

Die gemessene Abhängigkeit des integralen absoluten Reflexionsvermögens von der Probendicke wird anschließend mit der theoretischen Erwartung $R_{int,theo} (d,E)$ verglichen, um als Resultat den statischen Debye-Waller Faktor zu ermitteln. Die Verarbeitung der Meßresultate durch Anpassung der theoretischen Funktion kann entweder nach Abruf der Resultate in einer externen Rechenanlage oder in einer in der Verarbeitungseinheit 7 vorgesehenen Recheneinheit durchgeführt werden. Die Anpassung der theoretischen Funktion wird dabei in der Regel durch numerische Variation des anzupassenden Parameters E mit einem der gängigen Fit-Verfahren wie beispielsweise chi$^2$-Minimierung ausgeführt werden.

Das Anpassungsergebnis für den statischen Debye-Waller Faktor E oder eine davon eindeutig abhängende Größe, wie beispielsweise der Debye-Waller Parameter L (definiert mit E = exp(-L), stellt die Meßgröße des erfindungsgemäßen Verfahrens dar, aus dem, bei Kombination mehrerer Beugungsordnungen, die Dichte und Ausdehnung ausgeschiedener Fremdphasen abgeleitet werden.

Zu beachten ist, daß es sich insoweit um ein lokales Meßverfahren handelt, d.h. daß bei Bestrahlung eines kleinen Kristalloberflächenelements die Meßergebnisse für einen diskreten Bereich der Kristallscheibe gewonnen werden. Wird eine ortsauflösende Untersuchung gewünscht, kann die Kristallscheibe durch relative Translation gegenüber dem Wellen- bzw. Teilchenstrahl abgetastet werden, also auch eine Ortsabhängigkeit der Verteilung von Fremdphasen-Ausscheidungen bestimmt werden und eine Karthographierung der Kristallscheibe erfolgen.

Bei einer besonders vorteilhaften Ausführungsform der Erfindung wird - wie weiter oben bereits erwähnt - Synchrotronstrahlung sowie ein energiedispersiver Detektor eingesetzt. Das kontinuierliche Spektrum der Synchrotronstrahlung erlaubt, die Bragg-Bedingung für mehrere Beugungsordnungen bei einer diskreten Kristallstellung zu erfüllen. Damit wird eine einfache Möglichkeit geboten, bei den erfindungsgemäßen Untersuchungen die Messung des integralen absoluten Reflexionsvermögens für mehrere Beugungsordnungen simultan durchzuführen.

Mehrere vorteilhafte Eigenschaften des erfindungsgemäßen Verfahrens sind offensichtlich. Es erlaubt die Bestimmung des statischen Debye-Waller Faktors mit Ortsauflösung, d.h. eine Karthographierung der Einkristallscheibe. Weiterhin wird eine schnelle Durchführbarkeit des Meßverfahrens gewährleistet, da z.B. mit ausreichend starken Röntgenquellen die Einzelmessungen sehr schnell durchgeführt werden können. Ein wesentlicher Vorteil ist auch die Verwendung kleiner Wellenlängen, da für kurzwellige Strahlung Unsicherheiten durch Absorptionseffekte zum einen im Kristall und zum anderen in Wänden von umgebenden Apparaturen vernachlässigbar sind; weiterhin können deshalb auch dicke Proben untersucht werden oder Messungen während einzelner Bearbeitungsschritte in situ ausgeführt werden, beispielsweise an Kristallen, die sich beim Tempern innerhalb eines Ofens befinden, und durch Verwendung sehr kurzwelliger Strahlen keine wesentlichen Störungen durch die Wände auftreten.

**Patentansprüche**

1. Verfahren zur Untersuchung von einkristallinem Material auf Ausscheidungen von Fremdphasen, wobei eine Durchstrahlung diskreter Kristallbereiche mit Wellen- oder Teilchen-Strahlen, eine Aufzeichnung der Intensitätsverteilung von unter Bragg-Bedingungen gebeugten Strahlen und eine Bestimmung des statischen Debye-Waller-Faktors durch Anpassung aufgezeichneter Intensitätswerte an eine vorgegebene theoretische Funktion erfolgen,
   **gekennzeichnet durch**
   nachstehend mit angegebenen Einzelheiten aufgeführte automatisierte Schritte:

   A 1) Untersuchung eines ersten diskreten Kristallbereichs einer als Scheibe oder Plättchen vorliegenden Probe (3) durch:
   i) Messen des absoluten Reflexionsvermögens in einer ersten Beugungsordnung bei Bragg-Reflexion an Netzebenen (4) des Kristallgitters, die senkrecht zur Kristalloberfläche stehen, mittels eines Photonen- bzw. Teilchen-Detektors (6);
   ii) Drehen der Probe (3) um eine erste Achse (1), die senkrecht auf der Beugungsebene steht, welche durch den einfallenden Strahl und den gebeugten Strahl definiert ist, zur Variation der Orientierung: Strahl/Probe (3);
   iii) Speichern der vom Photonen- bzw. Teilchen-Detektor (6) ausgegebenen Signale für das gemessene Reflexionsvermögen als Funktion des Drehwinkels der Probe (3) um ihre erste Achse (1);
   iv) Integrieren dieser Meßwerte über den Drehwinkel zur Bestimmung des integralen Reflexionsvermögens $R_{int}$;
   v) Variation der effektiven Dicke der Probe (3) durch Schwenken der Probe (3) um eine zweite Achse (2), die senkrecht auf der Netzebene (4) steht, an der gebeugt wird, mit Wiederholung der unter i) bis iv) angegebenen Operationen;
   vi) Bestimmen und Speichern des integralen Reflexionsvermögens für eine Mehrzahl j von Einstellungen des Schwenkwinkels als eine Folge von Meßwerten $R_{int}^j$ in Abhängigkeit von der effektiven Dicke der Probe (3);
   vii) Bestimmen des ersten statischen Debye-Waller-Faktors ($E_{220}$) durch Anpassung der vorgegebenen theoretischen Funktion, in der mit E als Parameter die Abhängigkeit des integralen Reflexionsvermögens mit der Dicke der Probe (3) in Zusammenhang steht, an die Folge der aufgezeichneten Meßwerte von $R_{int}^j$;
   B) Durchführung von mindestens einem weiteren Untersuchungs-Durchgang, in dem die Verfahrensschritte A1) i) bis A 1) vii) als A 1+n) i) bis A 1+n) vii) bei einer anderen Beugungsordnung wiederholt werden und die Bestimmung mindestens eines weiteren Debye-Waller-Faktors ($E_{440}$, ...) erfolgt;
   C) Auswertung der in den einzelnen Durchgängen A) bis B) durchgeführten Untersuchungen in Abhängigkeit des statischen Debye-Waller-Faktors von der Beugungsordnung bezüglich der Dichte und der mittleren Ausdehnung ausgeschiedenor Fremdphasen.

2. Verfahren nach Anspruch 1,
   **gekennzeichnet durch**
   die nachstehend angegebenen zusätzlichen Schritte:
   D) Untersuchung von mindestens einem weiteren diskreten Kristallbereich durch ortsauflösende Wiederholung der Verfahrensschritte A) bis C) an der Probe (3);
   E) Kartographierung der ortsaufgelöst bei der Probe (3) festgestellten Angaben zur Dichte und mittleren Ausdehnung von ausgeschiedenen Fremdphasen im Kristallgitter des einkristallinen Materials.

3. Verfahren nach Anspruch 1 oder 2,
   **dadurch gekennzeichnet,** daß
   zur Durchstrahlung der Probe (3) Röntgenstrahlung im Wellenlängenbereich von 0,02 nm bis 0,003 nm, entsprechend Photonenenergien von 50 keV bis 450 keV, eingesetzt wird.

4. Verfahren nach Anspruch 1 oder 2,
   **dadurch gekennzeichnet,** daß
   zur Durchstrahlung der Probe (3) Synchrotronstrahlung eingesetzt wird und der Nachweis der gestreuten Strahlung energiedispersiv erfolgt.

Fig.1

Fig.2

Fig.3